# EUROPEAN PATENT APPLICATION

(11) **EP 1 510 936 A1**
(43) Date of publication of application: **02.03.2005**
(21) Application number: 03019778.4
(22) Date of filing: 29.08.2003
(51) Int. Cl.: G06F 17/30

(54) **Redundancy-free provision of multi-purpose data**

(71) Applicant: UBS AG, 8001 Zürich (CH)
(72) Inventor: Schafflützel, Thierry, 8962 Bergdietikon (CH); Aerne, Bruno, 8952 Schlieren (CH); Blatz, Jürgen, 78465 Konstanz (DE); Mache, Christoph, Dr., 9500 Wil (CH)
(74) Representative: Röthinger, Rainer, Dipl.-Phys.

(57) **Abstract**

The invention relates to aspects in context with updating a data base that is jointly used by two or more different processing mechanisms on the basis of multi-dimensional data sets. A network component performing this task includes a master data base for storing master data including static data and a multi-dimensional generic data template having predefined data fields relating to elementary information determined by the data input requirements of the different processing mechanisms. An interface is provided for receiving accounting-related data sets from a plurality of individual sub-systems. Processing resources having access to the master data base generate for each accounting-related data set one or more associated multi-dimensional data sets by deriving elementary information included in the accounting-related data set and in static data associated with the accounting-related data set and by writing the derived elementary information in corresponding data fields of the data template. On the basis of the elementary information contained in the one or more multi-dimensional data sets an elementary data base that is jointly used by the different processing mechanisms to generate report data sets is updated.

## Description

### Technical Field

The present invention relates to managing accounting-related data in a computer network. More specifically, the invention relates to automatically generating processing-optimized and redundancy-free data for multiple applications.

### Background of the Invention

The volume of accounting-related data that is permanently generated and that has to be regularly managed and evaluated necessitates even in small-size businesses the implementation of computer-assisted mechanisms. In larger businesses accounting-related data are sometimes generated by dozens of individual software applications often running on different technical platforms.

Especially in larger businesses a single data processing (e.g. reporting) mechanism is not sufficient for efficiently controlling all operations. Hence, different data processing mechanism delivering different output data including required operational information are commonly deployed. Although the data processing mechanisms differ with respect to the generated information, they are usually based on the same or at least similar accounting-related data received from the individual software applications.

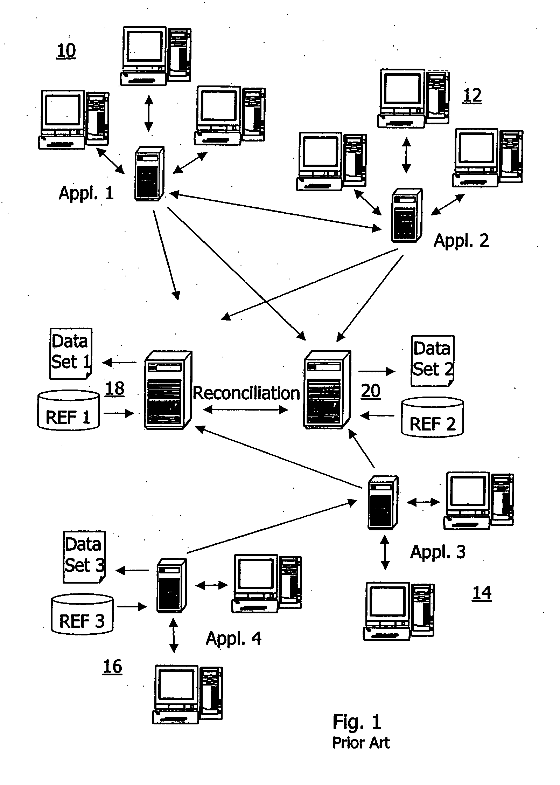

This situation is schematically depicted in Fig. 1. In the scenario of Fig. 1 four software applications are running in parallel in different computer networks 10, 12, 14 and 16. Each computer network 10, 12, 14, 16 comprises a central component (like an application server or a mainframe computer) and several terminal devices like clients, presentation servers, automatic teller machines (ATMs), etc. attached to the central component. Data received from the terminal devices is converted by the applications running on the central components into accounting-related data.

As illustrated for computer networks 10, 12 and 14 (applications 1, 2 and 3), the accounting-related data generated by the individual applications are transferred to central application servers 18, 20 for being processed further. More specifically, each of the central application servers 18, 20 applies a particular processing mechanism to the accounting-related data that are received from the computer networks 10, 12, 14 and produces output data that may be used for various operational purposes. Processing instructions data to be used by the different processing mechanisms applied by the central application servers 18, 20 are stored in local data bases REF 1 and REF 2 belonging to the central application servers 18, 20, respectively.

The multiplicity of central application servers 18, 20 and associated input data streams is necessitated by the fact that different processing mechanisms (applications) are in charge of generating the output data. These different processing mechanisms, although processing very similar accounting-related data, usually require different input data formats or process different informational contents included in the accounting-related data. As examples for processing mechanisms that are performed in parallel and on the basis of similar accounting-related data the mechanisms of management accounting and financial accounting can be mentioned. The first central application server 18 may thus for example be in charge of management accounting applying accounting principles REF 1 to generate data set 1 (e.g. in a management reporting context) and the second central application server 20 may be in charge of financial accounting applying accounting principles REF 2 to generate data set 2 (e.g. for the computerized preparation of balance sheets and associated reporting).

As illustrated for computer network 16 (application 4), the accounting-related data may be pre-processed locally within a particular network according to a processing mechanism using instruction data stored in a local network data base REF 3 to generate a pre-processed data set 3. In some cases the accounting-related data or the pre-processed data set 3 generated within one computer network 16 may additionally (or alternatively) be transferred to another computer network 14 for further data processing before being transferred to one or both of central applications servers 18, 20.

From Fig. 1 it becomes apparent that the complexity of the data processing system as a whole is high. Thus, the maintenance of the system is difficult. Moreover, lack of integration and lack of automation often requires manual interactions, e.g. duplicate data entries, as well as data conversions and data transfer processes. Also, the data throughput is slow, especially if sequential data processing as illustrated for computer networks 14 and 16 is performed. The low data throughput implies that the closing process for reporting, e.g. for providing specific accumulated information, takes a very long time. Currently, detailed accounting reports can very often not be provided until 15 days and more after a specified date like the end of the month. In this context it has to be kept in mind that in larger businesses hundreds of millions of individual data sets have to be evaluated every month.

Accounting-related data generated by the individual computer networks 10, 12, 14, 16 as well as output data generated by the central application servers 18, 20 have to be stored simultaneously in two or more memory locations (e.g. locally at the sites of each of the two central application servers 18, 20), leading to a high informational redundancy. This adds to the hardware requirements and in particular to the storage costs.

A further problem associated with redundant data storage is data authentication. If the same information is simultaneously stored in two or more memory locations, the provision of authenticated data for e.g. official reporting purposes becomes a difficult task and requires constant, and often manual, data reconciliation as indicated in Fig. 1 with an arrow between central application servers 18, 20.

One solution to the drawbacks of the scenario depicted in Fig. 1 might be to somehow integrate the functions of the two central application servers 18, 20 and the central component of the computer network 16. However, in view of the fact that the different processing mechanisms usually operate on different data and different data formats, such an approach would still involve redundant data storage, and thus complex data authentication mechanisms.

There is a need for a network component, a network system, a method, a computer program product and a data structure which, in the context outlined above, allow on the one hand for a redundancy-free provision of data for different processing requirements and which on the other hand facilitate data authentication. Furthermore, there is a desire to accelerate the provision of accumulated data when large amounts of data have to be handled.

### Summary of the Invention

This need is satisfied according to the invention by a network component for transforming accounting-related data sets into multi-dimensional data sets which are used to update a data base that is jointly used by different processing mechanisms like financial and management accounting mechanisms to provide report data sets. The network component includes a master data base for storing master data including static data and a multi-dimensional generic data template. The data template specifies a plurality of pre-defined data fields (or contents) relating to elementary information that is to be processed by the different processing mechanisms. The network component further comprises at least one interface for receiving the accounting-related data sets from a plurality of individual sub-systems. Furthermore, the network component comprises processing resources with access to the master data base. The processing resources are programmable to generate for each accounting-related data set one or more multi-dimensional data sets by deriving the elementary information included in the accounting-related data set and in associated static data and by writing the derived elementary information in the appropriate data fields specified by the data template. The elementary information included in the multi-dimensional data sets is used to update an elementary data base that is jointly used by the different processing mechanisms.

According to the invention, all the information required by the different processing mechanisms is generated along a single processing chain. Thus, an output-oriented topology is realized that strongly reduces redundancies and makes reconciliation efforts obsolete. The information derived from a specific accounting-related data set (primary data set) and from associated static data is included on an elementary level in one or more multi-dimensional data sets (secondary data sets) that form the basis for updating the elementary data base. In contrast to the variable accounting-related data sets which are continuously generated for individual transactions, static data are fixed or change only slowly.

The static data may include information that is required for generating the multi-dimensional data set but that is not or not explicitly included in the accounting-related data set. Thus, the provision of static data in the master data base helps to reduce network traffic, i.e. the amount of data that has to be transferred from the sub-systems to the network component because certain generic data common to several accounting-related data sets need not to be transferred with each accounting-related data set to the network component. It usually suffices to simply include a short reference to specific static data into the accounting-related data set transferred to the network component and the network component itself may then "complete" (enrich) the received accounting-relating data set by the associated static data for the purpose of deriving the elementary information required for generating the one or more multi-dimensional data sets.

Due to the highly granular nature of the multi-dimensional data sets and their completeness as regards the informational content required by the different processing mechanisms they may form the basis for updating the elementary data base that is jointly used by the different processing mechanisms. Furthermore, redundant data storage is avoided because the elementary data base serves as common data base for all processing mechanisms. Additionally, data authentication ambiguities do no longer occur since the elementary data base can be regarded as the single source for providing authenticated data. Thus, reconciliation processes as illustrated between the application servers 18, 20 in Fig. 1 can be dispensed with.

The conventional differentiation between balancing data warehousing on the one hand and data warehousing for reporting purposes on the other hand becomes obsolete by the integrated solution provided by the elementary data base. The elementary data base thus constitutes an integrated source for different types of reports including search and drill down mechanisms on e.g. balance sheet data (daily, weekly, etc.), profit center data, etc.

The elementary data base may include elementary data sets that at least partially correspond to the data fields of the data template. The elementary data sets may be created or changed by the processing resources in context with updating the elementary data base upon generation of new multi-dimensional data sets. The processing resources may thus be programmed to update the elementary data base by accumulating elementary information included for example in one or more particular data fields of the multi-dimensional data sets onto elementary data sets that are already existing in the elementary data base or that have to be newly created. Updating of the elementary data base may be performed batch-wise or in a continuous manner. According to a preferred continuous updating approach, the elementary data base is updated asynchronously as soon as one or more further multi-dimensional data sets have been generated.

In order to control the updating process, the processing resources may be programmed to assign one or more control attributes to the multi-dimensional data sets.

Control attribute types which are to be assigned to a multi-dimensional data set may be specified by the generic data template and may be inserted or already be included in one or more data fields of the multi-dimensional data sets.

Based on the one or more control attributes assigned to a particular multi-dimensional data set, the elementary information included in this multi-dimensional data set can be accumulated onto elementary data sets related to the control attributes. In other words, the control attributes may indicate the particular elementary data set onto which the elementary information included in a multi-dimensional data set is to be accumulated, e.g. appended or added.

The control attributes may relate to various aspects. For example, a control attribute in the form of an identification code identifying e.g. a customer, a customer position, an organizational entity serving the customer or the like may be assigned. Thus, the elementary information pertaining to this assignment can be accumulated onto the particular elementary data set related to this assignment.

Control attributes of the types specified by the generic data template or different therefrom may also be included in the elementary data sets to assist the tasks of the individual processing mechanisms generating the reporting data sets. The control attributes associated with the elementary data sets may for example contain structural information required to produce report data sets in the form of balance sheets or management accounting reports. The control attributes associated with the elementary data sets may be included in or appended to the elementary data sets and may at least in part be identical with or correspond to control attributes assigned to the multi-dimensional data sets.

In order to enable a tracking of the information flow, one or more of the elementary data sets stored in the elementary data base may be linked with at least one of related multi-dimensional data sets and related accounting-related data sets. In the context of the present invention a related multi-dimensional data set or accounting-related data set is defined as a data set that includes or is the source of information accumulated onto the elementary data set. Linking an elementary data set with a related data set may be performed in various ways like by appending to the elementary data set information about the memory location of the related data sets or vice-versa.

To cope with authorization problems, the elementary data base may be configured as the only source for providing information for generating the report data sets. This may imply that the different processing mechanisms generate the report data sets solely on the basis of the information included in the elementary data base. To enhance data integrity, the elementary data base may be configured as a read-only data base with respect to all accesses different from updating.

Besides the elementary data base and the master data base the network component may further comprise an entry data base that serves for storing the accounting-related sets received via the interface from the individual sub-systems. The accounting related data sets received from the sub-systems may all have the same format or may have individual formats characteristic of the individual applications that generated the accounting-related data sets. Especially when the accounting-related data sets are received in different formats, a data sourcing component may be provided to format the received accounting-related data sets and to write the formatted accounting-related data sets into the entry data base. Such an approach allows to provide the individual accounting-relating data sets in a pre-defined format to the processing resources generating the multi-dimensional data sets.

The data sourcing component may alternatively or additionally be configured to check the accounting-related data sets received from the sub-systems to determine data inconsistencies. Mechanisms may be provided to handle exceptions in the case of inconsistencies of one or more of the accounting-related data sets. In the case of inconsistencies, the data sourcing component may for example re-format a received accounting-related data set or notify an individual sub-system that a received accounting-related data set is not accepted, thus triggering a re-transmission of the accounting-related data set or of a complete file containing the accounting-related data set.

Additionally, the network component may comprise an item data base for storing the multi-dimensional data sets that were generated by the first processor from the accounting-related data sets. Thus, the item data base may be regarded as an intermediate data base arranged between the entry data base that stores the accounting-related data sets and the elementary data base that stores the elementary data sets. The provision of three individual data bases (that may physically be located on a single hardware component) is advantageous because it allows at any point in time to trace back the information as it proceeded in different formats from the individual sub-systems to the various processing mechanisms. In particular, it allows to determine the origin of data inconsistencies that in many cases can only be detected at the very end of the data stream, i.e. when applying individual processing mechanisms to the data stored in the elementary data base. In order to further facilitate the tracking of information, the multi-dimensional data sets stored in the item data base may be linked with at least one of the associated accounting-related data sets stored in the entry data base and one or more of the associated elementary data sets stored in the elementary data base.

As has been mentioned above, the elementary data base, as well as the master data base or any other system data base or combination thereof, may jointly be used by the different processing mechanisms. The processing mechanisms may be performed by dedicated or shared processing resources. The processing mechanisms are configured to generate report data sets based on the elementary data sets and, optionally, based on the multi-dimensional data sets. In general, report generation relies on report structure information (report definition data), that may be contained in the master data base, and on appropriate data extracts from the elementary data base or, optionally, any other system data base or combination thereof. Thus, the one or more processing mechanisms may be configured to extract selected elementary data sets stored in the elementary data base for reporting purposes. The report definition data may specify how information included in the extracted elementary data sets has to be accumulated or evaluated.

One or more processing mechanisms may also be configured to extract selected elementary data sets stored in the elementary data base for evaluation purposes. Based on that, additional processing mechanisms might be in place to provide evaluation results by applying pre-defined evaluation criteria and to generate at least one of multi-dimensional data sets and accounting-related data sets, in particular if the actual values of elementary data sets differ from values originally extracted. The resulting multi-dimensional data sets may be used by a subsequent processing mechanism to update the elementary data sets.

The processing mechanisms may be based on a set of processing instruction data, e.g. sets of values and rules which have to be applied on the data to be processed to generate the multi-dimensional data sets, the elementary data sets or the multi-dimensional data sets. The processing instruction data may be kept outside of the program code of a particular processing mechanism (soft coded approach) or could be part of the program code (hard coded approach). If a soft coded approach is implemented, the processing instruction data may be included as reference data in the static data stored in the master data base. This has the advantage that changes to e.g. table entries on reference data are independent from program code changes.

The processing resources may be programmed to execute at least one processing mechanism to transform an accounting-related data set into one or more multi-dimensional data sets using static data associated with the accounting-related data set. When performing the transformation the processing resources derive the elementary information included in the accounting-related data set and in any static data associated with the accounting-related data set and write the elementary information thus derived in the corresponding data fields specified by the data template, thus assembling the one or more multi-dimensional data sets. The processing mechanism may indicate how the data template is to be applied. The processing mechanism may for example derive the control attributes to be assigned to a particular multi-dimensional data set, determine the particular static data associated with the accounting-related data set, etc. Processing instruction data specific for the processing mechanisms applied to transform the accounting-related data sets into the multi-dimensional data sets may be stored as static data in the master data base.

Depending on the requirements, different types of accounting-related data sets may be defined. An individual type of accounting-related data set may for example be associated with each individual sub-system or application that generates accounting-related data sets. For each type of accounting-related data set an associated transformation for generating the multi-dimensional data sets may be provided. Moreover, the processing resources may be programmed to identify for a specific type of accounting-related data set the particular transformation (i.e. processing mechanism and associated processing instruction data) associated therewith. Additionally or alternatively, the processing resources may be programmed to identify for a specific accounting-related data set the associated static data. To that end the accounting-related data sets may be provided with a reference to associated static data as mentioned above.

The network component may have a first interface to receive the accounting-related data sets from the individual sub-systems and an additional second interface that enables an access to the master data base. Such an access may be performed to update the master data base. Updating the master data base may relate to at least one of the static data, (including reference data) and the processing instruction data. The one or more interfaces of the network component may be part of or in communication with the data sourcing component.

The network component may be implemented as a system including only a single tier or as a multi-tiered system. The network component may for example be configured as a three-tiered system including at least one presentation server, at least one application server and at least one data base server. The one or more presentation servers may be configured to present the individual data sets or information derived therefrom, whereas the at least one application server may include processing resources mentioned above. The one or more data base servers may comprise the individual data bases. Alternatively, the network component may be configured as a two-tiered system including at least one presentation server and at least one combined application and data base server.

According to a further aspect of the invention, a computer network system is provided that comprises the network component (which in turn may comprise individual sub-components) described above as well as a plurality of sub-systems attached to the one or more interfaces of the network component. On each sub-system one or more individual applications for generating the accounting-related data sets may be running.

The individual applications preferably provide standardized accounting-related data sets. The provision of standardized accounting-related data sets in a pre-defined format is especially advantageous. In order to ensure that the network component can deduce from the received accounting-related data sets information on an elementary level, the individual applications may be programmed not to perform any pre-processing with respect to the particular processing mechanisms that are to be applied by the network component.

According to a still further aspect of the invention a method of transforming accounting-related data sets into multi-dimensional data sets is provided. The method includes providing master data including static data and a multi-dimensional generic data template which has pre-defined data fields relating to elementary information determined by the data input requirements of the different processing mechanisms. The accounting-related data sets are received from a plurality of individual sub-systems. For each accounting-related data set one or more associated multi-dimensional data sets are generated by deriving elementary information included in the accounting-relating data set and in static data associated with the accounting-related data set and by writing the derived elementary information in corresponding data fields specified by the data template. Using the multi-dimensional data sets, an elementary data base is updated on the basis of the elementary information contained therein. The elementary data base is jointly used by the different processing mechanisms.

The invention can be implemented as a hardware solution, as a software solution or as a combination thereof. As regards a software solution, the invention relates to a computer program product comprising program code portions for performing the above steps when the computer program product is run on one or more components of a computer network. The computer program product may be stored on a computer readable recording medium.

According to a further aspect of the invention, a multi-dimensional data structure generated from a plurality of accounting related data sets using the steps outlined above and jointly used by a plurality of processing mechanisms differing with respect to data input requirements is provided. The data structure includes a plurality of elementary data sets that reflect the data fields of a multi-dimensional generic data template. The data fields reflected by the elementary data sets relate to elementary information determined by the data input requirements of the different processing mechanisms. The elementary data sets contain accumulated elementary information derived from multi-dimensional data sets generated from the accounting-related data sets using the data template.

### Brief Description of the Drawings

Further details, embodiments, modifications and enhancements of the present invention may be obtained from consideration of the following description of various illustrative embodiments of the invention in conjunction with the drawings, in which:
- Fig. 1: is a schematic diagram illustrating a system for generating and processing accounting-related data according to the prior art;
- Fig. 2: is a schematic diagram illustrating a system for generating and processing accounting-related data according to an embodiment of the present invention;
- Fig. 3: is a schematic diagram illustrating an exemplary three-tiered server architecture deployed for the embodiment of Fig. 2;
- Fig. 4: is a schematic diagram illustrating an exemplary two-tiered server architecture deployed for the embodiment of Fig. 2;
- Fig. 5: is a schematic diagram illustrating the co-operation of the individual parts of the architectures shown in Figs. 3 and 4 according to the present invention;
- Fig. 6: is a flow chart illustrating the generation of multi-dimensional data sets;
- Fig. 7: is an empty table illustrating a generic multi-dimensional data template used according to the present invention;
- Fig. 8: illustrates the format of two multi-dimensional data sets that have been generated from a single accounting-related data set resulting from an ATM transaction; and
- Fig. 9: illustrates the exemplary format of elementary data sets onto which the multi-dimensional data sets of Fig. 8 are accumulated.

### Description of Preferred Embodiments

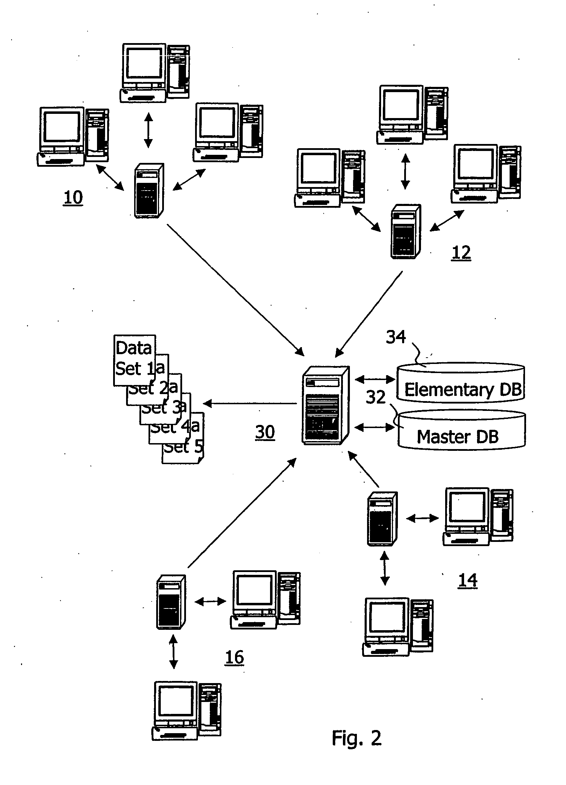

Fig. 2 illustrates a simplified block diagram of a computer network system according to the present invention. The network system comprises four sub-systems 10, 12, 14, 16 as described in context with Fig. 1. Where appropriate, the same reference numbers will be used throughout this detailed description and the drawings to refer to the same or like parts.

The network system depicted in Fig. 2 comprises a single central network component 30 including a master data base 32 and an elementary data base 34. The network component 30 is configured as a network node, receiving different types of accounting-related data sets from the sub-systems 10, 12, 14, 16 and processing the received accounting-related data sets using different processing mechanisms to generate various kinds of report data sets (data set 1, data set 2, ...).

More specifically, the network component 30 accumulates elementary information included in or derived from the accounting-related data sets received from the sub-systems 10, 12, 14, 16 onto elementary data sets stored in the elementary data base 34. The processing instruction data used by the processing mechanisms when deriving the elementary information from the accounting-related data sets and for accumulating the derived elementary information onto the elementary data sets are retrieved from the master data base 32. Also retrieved from the master data base 32 are the processing instructions characteristic of the individual processing mechanism for generating the report data sets.

Whereas in the conventional network system depicted in Fig. 1 the report data sets are generated in a distributed manner by a plurality of network components having local data bases, in the network system according to the invention shown in Fig. 2 only the central network component 30 is generating the various report data sets from information that is stored on an elementary level in the elementary data base 34. Hence, redundant data storage is avoided and data reconciliation becomes obsolete. This not only reduces storage requirements and manual interactions but also reduces the time required for evaluation processes like reporting mechanisms. It has been found that in large businesses in which hundreds of millions of accounting-related data sets are generated each month comprehensive reports can thus already be obtained three to five days after the end of the month.

A comparison of the network systems of Fig. 1 and Fig. 2 further shows that whereas the conventional network system of Fig. 1 involves extensive pre-processing of the generated accounting-related data sets within the individual sub-systems (see sub-systems 14 and 16 in Fig. 1), no such pre-processing is performed in the network system according to the invention shown in Fig. 2. Avoiding any pre-processing or at least drastically reducing pre-processing insures that no elementary information included in the accounting-related data sets generated by the sub-systems 10, 12, 14, 16 gets lost, i.e. can no longer be derived from the (pre-processed) accounting-related data sets eventually received by the network component 30. Refraining from or at least drastically reducing pre-processing of the accounting-related data sets by the individual sub-systems 10, 12, 14, 16 is thus advantageous when implementing the processing approach according to the invention, that is based on the concept of centrally deriving the elementary information.

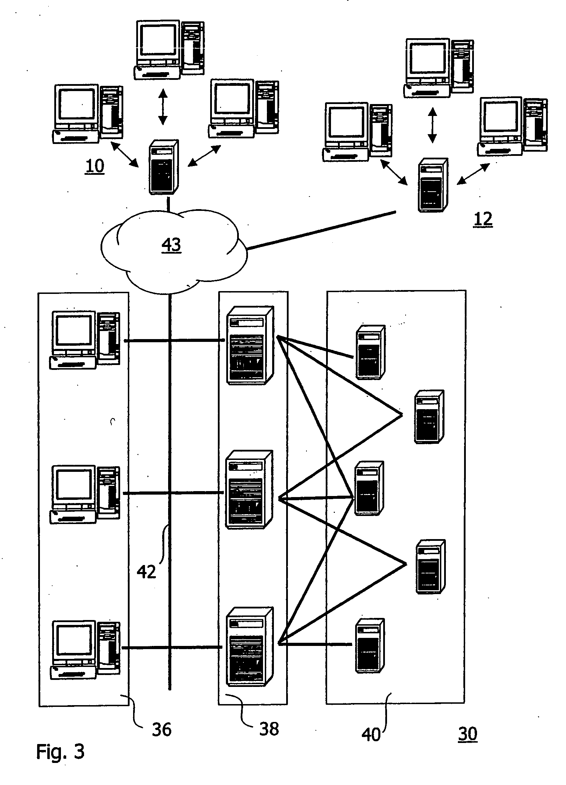

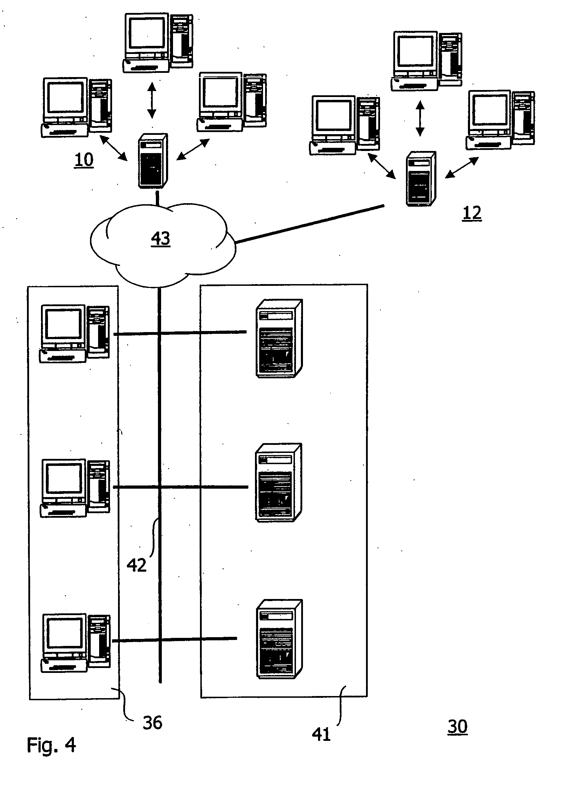

As regards possible hardware implementations of the network component 30, reference is now made to Figs. 3 and 4.

Fig. 3 shows one possible client/server configuration, namely a so-called three-tiered architecture in which the present invention can be carried out. According to the three-tiered architecture, the network component 30 is separated into three functional groups: a plurality of presentation servers 36, a plurality of application servers 38 and a plurality of data base servers 40 as illustrated in Fig. 3 in a hardware-related view.

With the three-tiered architecture shown in Fig. 3, each hardware group 36, 38, 40 of the network component 30 is set up to support demands of its functions. The tasks relating to the presentation of data are handled by the presentation servers 36, which can typically be configured as personal computers or work stations, enabling easy access to the system's functionalities as regards the presentation and processing of enriched data sets generated by individual applications running on the application servers 38.

The presentation servers 36 are coupled to the application servers 38 by means of a local area network (LAN) 42 or any other type of wired or wireless network, such as a wide area network (WAN), a wireless LAN (WLAN), a public switched telephone network (PSTN), an integrated services digital network (ISDN), a satellite link, and the like. Also connected to the LAN 42 via a homogeneous or inhomogeneous network 43 are the individual sub-systems providing the accounting-related data sets. In Fig. 3 only two of the sub-systems 10, 12 are exemplarily depicted.

The application servers 38 interfacing the presentation servers 36 include the processing logic. In the present embodiment separate application servers 38 are provided for the task of processing the received accounting-related data sets to generate multi-dimensional data sets including the elementary information, for the task of generating and updating the elementary data base (not depicted in Fig. 3) and for the task of retrieving information from the elementary data base in conjunction with generating report data sets. The application servers 38 additionally provide system services such as spooling, dispatching user requests, and formatting data.

The application servers 38 interface with the data base servers 40. The data base servers 40 host the master data base 32 and the elementary data base 34 that have been described in conjunction with Fig. 2 as well as further data bases that will be described in more detail below.

According to an alternative approach, a two-tiered architecture as shown in Fig. 4 can be used. The two-tiered architecture schematically illustrated in Fig. 4 has similarities with the architecture of Fig. 3. However, the functions of the application servers and data base servers have been integrated using combined application and data base servers 41. Like in the embodiment depicted in Fig. 3, the tasks of processing the received accounting-related data sets, of generating and updating the elementary data base and of retrieving information from the elementary data base in context with generating report data sets are performed by three dedicated servers 41.

The presentation layer depicted in Figs. 3 and 4 includes user interfaces that are based on WEB and MAP servers as well as on fat clients, e.g. for data presentation or work flow control software packages.

The hardware approaches shown in Figs. 3 and 4 are advantageous in that interdependencies between the network component 30 and the individual sub-systems 10, 12, ... are strongly reduced. Furthermore, there is only a single point-of-entry for the accounting-related data sets that are provided by the sub-systems 10, 12, ... to the network component 30. This is an expression of the approach of merging the streams of accounting-related data sets that are to be subjected to different processing mechanisms. The concept of a single point-of-entry allows to enhance data quality and enables the consistent application of data quality checks. Another advantage of focusing the accounting-related data streams to a single point-of-entry is the resulting single stream of information which allows to accelarate data processing by applying uniform data processing mechanisms and by introducing massive parallel processing techniques.

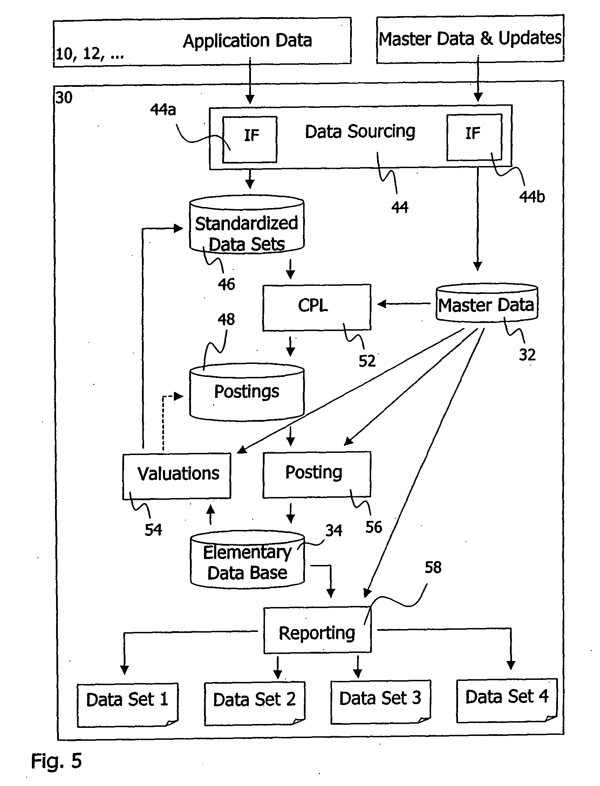

In the following, the basic parts of the servers depicted in Figs. 3 and 4 as well as the co-operation of these parts in context with the processing of accounting-related data sets received from the sub-systems 10, 12,... will be described with reference to the integrated view of Fig. 5.

As becomes apparent from Fig. 5, the network component 30 is considered to receive basically two data streams. On the one hand, the network component 30 receives application data in the form of accounting-related data sets generated by individual applications running on the sub-systems 10, 12, .... If, for example, the sub-system 10 is configured as an ATM or a group of ATMs, an accounting-related data set for an ATM transaction may include a code identifying the particular sub-system, (i.e. a particular ATM or group of ATMs), a code identifying a customer, a code identifying a particular customer account, a transaction value and a code relating to the transaction currency. The data sets may be provided to the network component 30 in a standardized format or - with respect to legacy systems - in a format that is not standardized but transformable to the required standard format.

On the other hand, the network component 30 receives master data and updates for master data. The master data may for example include static data and processing instruction data. Static data include objects, rules, hierarchies and reference data like lookup tables or tables of valid values containing a code and a description. Static data are applied to the different types of data sets like accounting related data sets, multi-dimensional data sets, elementary data sets, etc.

All the data received from the outside are received via a central data sourcing component 44. The data sourcing component 44 may perform certain pre-processing and data enrichment tasks that do not diminish the informational content of the data received from the outside and may take the form of a separate server. As becomes apparent from Fig. 5, the data sourcing component 44 comprises two individual interfaces 44a, 44b for separately receiving application data in the form of accounting-related data sets on the one hand and master data (including static data, processing instruction data and updates) on the other hand.

The data received from the outside are transferred via the data sourcing component 44 into dedicated data bases. More specifically, the accounting-related data sets received via the first interface 44a are stored in an entry data base 46, whereas the master data received via the second interface 44b are stored in the master data base 32. The network component 30 further comprises an item data base 48 for storing multi-dimensional posting related data sets as well as an elementary data base 34 for storing elementary data sets, e.g. elementary balance-related data sets.

Additionally, the network component 30 comprises processing resources that are symbolically illustrated as separate processors 52, 54, 56, 58. The processing resources can be configured as central processing units (CPUs), micro controller units (MCUs), digital signal processors (DSPs), or the like. It is possible to integrate the individual processors 52, 54,... into fewer components or into a single component or to distribute the task of an individual one of the processors 52, 54,... among several processors. The processors 52, 54,... are part of the application servers (reference numeral 38 in Fig. 3 and reference numeral 41 in Fig. 4) and configured to perform individual processing tasks in context with the present invention.

Now the cooperation of the individual parts of network component 30 depicted in Fig. 5 will exemplarily be described in context with transforming an accounting-related data set generated by an ATM into several multi-dimensional data sets which are used to update the elementary data base 34.

The accounting-related data set is received via the first interface 44a of the network component 30. The interface 44a serves as single point-of-entry for all accounting-related data sets regardless of their origin.

The ATM data set received by the first interface 44a may have a standardized or a non-standardized format. In order to streamline the processing tasks performed within the network component 30 it is advantageous to process the accounting-related data sets within the network component 30 in a standardized format. Thus, the data sourcing component 44 formats any non-standardized accounting-related data sets and writes the formatted (standardized) accounting-related data sets into the entry data base 46. The formatting is done such that no elementary information contained in the received accounting-related data sets gets lost. The entry data base 46 is thus filled with accounting-related data sets having a standardized format.

It should be noted that the applications running on the individual sub-systems are configured such that no pre-processing is performed that diminishes the informational content originally generated. Here, the term informational content relates to all informational aspects required by the processing mechanisms performed by the processor 58 to generate the required information, i.e. in the present embodiment the processing mechanisms of generating balance sheet data sets for official reporting purposes on the one hand and report data sets for e.g. management accounting purposes on the other hand.

Besides formatting any non-standardized accounting-related data sets the data sourcing component 44 is configured to check the received accounting-related data sets to ensure a complete, timely and accurate delivery of the data sets from the individual sub-systems. In the case of inconsistencies as regards the data set content, format, etc., the data sourcing component 44 allows to handle exceptions. Handling exceptions may include completing a received accounting-related data set (if possible), notifying a transmitting sub-system of the inconsistency, triggering a re-transmission of a file containing the accounting-related data set, etc.

The second interface 44b enables updates of the static data that are stored in the master data base 32. In general, changes to table entries on static data occur independent from the delivery of accounting related data sets, occur at different points of times and are made available for processing mechanisms at a certain point of time for which data consistency can be guaranteed. Static data are kept outside of the soft-coded program code for the processing mechanisms, by which they are applied when processing accounting-related data sets or multi-dimensional data sets or elementary data sets or the like.

As soon as a new accounting-related data set is stored in the entry data base 46, it is automatically retrieved by the processor 52 that applies a central processing logic (CPL) to the retrieved accounting-related data set. Thus, the CPL processor 52 operates asynchronously. It should be noted that any data sets retrieved from the entry data base 46 are not immediately deleted but remain in the entry data base for tracking the flow of information at a later point in time if required.

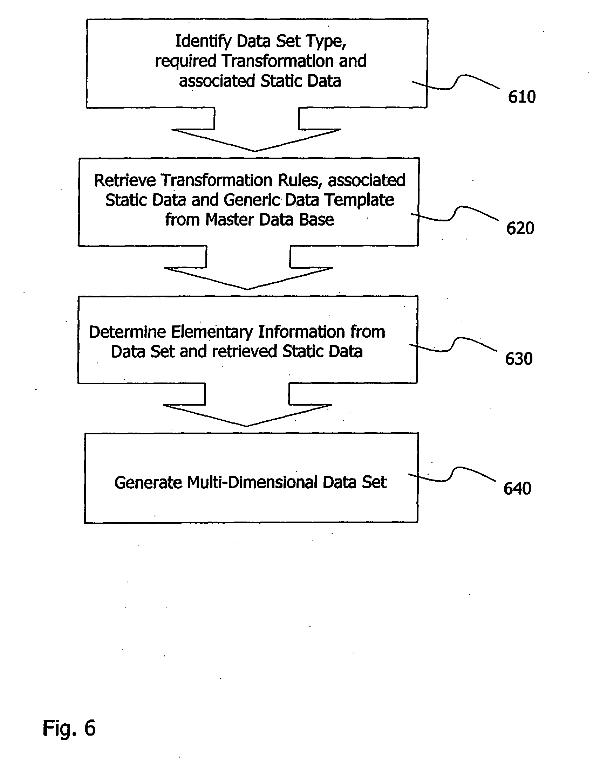

The basic task of the CPL processor 52 is to generate one or more multi-dimensional posting-related data sets from an individual accounting-related data set retrieved from the entry data base 46 as will now be explained with reference to the flow chart of Fig. 6.

In a first step 610 the CPL processor 52 identifies the type of accounting-related data set retrieved from the entry data base 46 and the processing mechanism that has to be applied by the CPL processor 52 to transform the accounting-related data set into the one or more multi-dimensional posting-related data sets. In the present case the CPL processor 52 thus determines that an ATM data set has been retrieved from the entry data base 46 and that accordingly an ATM transformation routine has to be applied to this data set. Other types of accounting-related data sets that may be identified by the CPL processor 52 could include data sets relating for example to e-banking transactions like an electronic funds transfers or the like.

Additionally, the CPL processor 52 identifies for the retrieved ATM data set the associated static data. The static data associated with the ATM data set can for example be determined using the customer account identificator included in the ATM data set as a reference.

Using the customer account identificator as reference, the CPL processor 52 retrieves in a next step 620 associated static data about a customer involved, the customer's position involved, the entity serving the customer etc. from a look-up table or any other suitable data structure stored in the mater data base 32. The CPL processor 52 further retrieves the appropriate ATM transformation and generation rules from the master data base 32 in order to produce multi-dimensional data sets as required by the multi-dimensional generic data template.

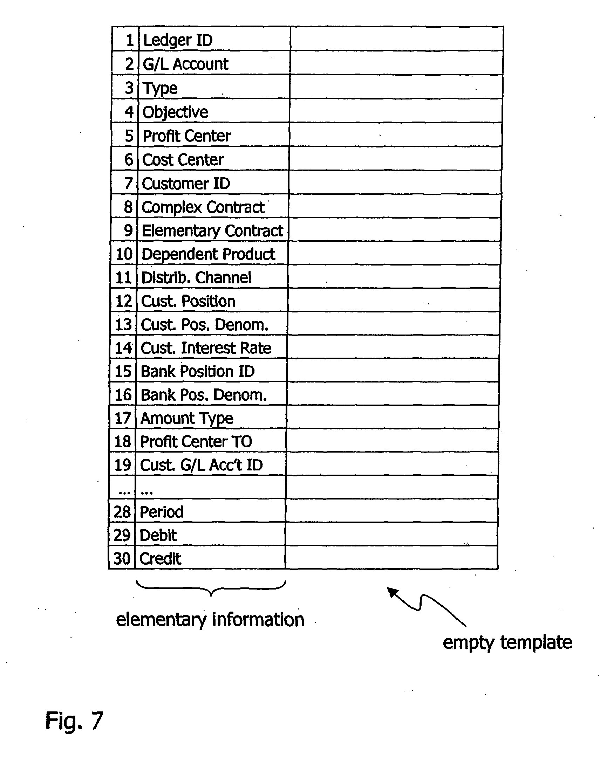

An exemplary generic data template is partially depicted in Fig. 7. The generic data template basically includes a plurality of predefined data fields that specify all the elementary information required by the various processing mechanisms applied by the processor 58 to generate different kinds of report data sets. In other words, the data fields of the generic data template reflect the combined input requirements of the plurality of different processing mechanisms that are to be performed at a later point in time. Also, the generic template is configured to be applicable to all types of accounting-related data sets that may be received via the interface 44a or that may be generated by processing mechanisms within the network component 30. In the embodiment depicted in Fig. 7 the generic data template is comprised of 30 different data fields. Depending on the particular report requirements, the number of individual data fields may be increased or, to a certain degree, decreased.

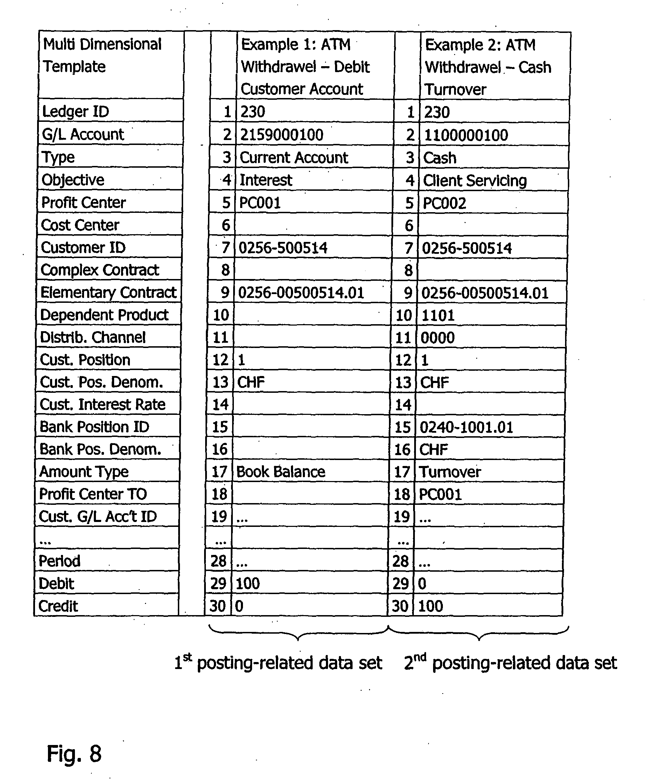

In a next step 630 the CPL processor 52 processes the ATM data set retrieved from the entry data base 46 and the associated static (and reference) data retrieved from the master data base 32 to derive the elementary information included therein. This task is performed under the control of the applicable ATM transformation rules retrieved from the master data base 32. The transformation rules specify how and which multi-dimensional posting-related data sets are to be generated in a further step 640 by the CPL processor 52 from the ATM data set and the associated static data. In the exemplary case of an ATM data set the transformation rules specify that two individual multi-dimensional posting-related data sets have to be generated as illustrated in Fig. 8.

From Fig. 8 it becomes apparent that, applying the ATM transformation rules, the CPL processor 52 generates a first posting-related data set titled "Debit Customer Account" and a second posting-related data set titled "Cash Turnover". As can be seen, not all predefined data fields of the generic data template are applicable to the ATM data set. Consequently, individual ones of the predefined data fields remain empty or can be omitted (e.g. data fields 6 and 8 titled "Cost Center" and "Complex Contract", respectively, or data field 15 titled "Bank Position ID" of the first posting-related data set).

The generic data template depicted in Fig. 7 and the data sets shown in Fig. 8 are multi-dimensional in that they include a comparatively high number of pre-defined data fields. Depending on the input requirements of the processing mechanisms, the generic data template may include more than twenty or even more than forty predefined data fields. Due to this multi-dimensionality of the generic data template, the individual posting-related data sets generated by the CPL processor 52 on the basis of this generic data template are also multi-dimensional in that they include much more information than conventional data sets used for posting purposes.

Also, the information contained in the individual multi-dimensional posting-related data sets generated by the CPL processor 52 is in general much more elementary than the information contained in conventional data sets used for posting purposes (that have only to satisfy the input requirements of one single processing mechanism). The fact that the multi-dimensional posting-related data sets generated by the CPL processor 52 on the one hand have a high informational content as regards the combined input requirement of a plurality of processing mechanisms and on the other hand include information on a very elementary level is beneficial as regards reducing data redundancy and increasing data throughput.

The transformation routine performed by the CPL processor 52 includes a control logic that assigns control attributes to the posting-related data sets. The control attributes control the later accumulation of the elementary information in the elementary data base 34 and the generation of report data sets. The assignment of the control attributes is performed entirely automated based on the individual transformation routine and the information contained in the accounting-related data sets as well as in the associated static data. In general, the control attributes reflect the level of detail and dimensions of reports that can be generated as well as the technical flexibility and capabilities of the overall system.

The control attributes assigned by the CPL processor 52 include different predefined codes required for accumulating the elementary information in the elementary data base and for generating the report data sets by the different processing mechanisms. Thus, the control attributes may for example include a General Ledger (G/L) account code and a currency code (both required for the processing mechanism of generating financial accounting reports) and a profit/cost center code and a customer ID code (both required for the processing mechanism of generating management accounting reports).

The individual multi-dimensional posting-related data sets generated by the CPL processor 52 (like the two posting-related data sets shown in Fig. 8 generated for an ATM data set) are stored as separate items in the item data base 48. When storing the multi-dimensional data sets in the item data base 48 the CPL processor 52 links each data set stored in the item data base 38 with the corresponding accounting-related ("parent") data set stored in the entry data base 46. This might be done by appending to each posting-related set a reference to the memory location of the parent data set in the entry data base 46.

The posting-related data sets stored in the item data base 48 are retrieved by a processing mechanism running on the posting processor 56. The posting processor 56 has the task of updating the elementary data base 34 on the basis of the elementary information contained in the multi-dimensional data sets stored in the item data base 48. The elementary data base 34 is configured as a relational data base having read-only restrictions with respect to all accesses different from the updating process performed by the posting processor 56. This guarantees a high integrity and authenticity of the information stored in the elementary data base 34.

The posting processor 56 accumulates the elementary information included in the posting-related data sets onto already existing or newly created elementary data sets stored in the elementary data base 34. This accumulation is performed taking into account the individual control attributes assigned by the CPL processor 52 under additional control of (posting) control data stored as processing instruction data in the master data base 32.

In the case of the exemplary ATM transaction resulting in the exemplary multi-dimensional posting-related ATM data sets shown in Fig. 8, the posting processor 56 accumulates the transaction amount included as elementary information in data fields 29 and 30 (Debit/Credit) of the posting-related data sets onto those elementary data sets in the elementary data base 34 that are associated with exactly the same set of individual control attributes (indicated as data fields 1 to 19ff. in the posting-related data sets of Fig. 8). Thus, the G/L account code, the customer ID code and all the other codes fulfill their functionality as control attributes. In the exemplary embodiment discussed here the various combinations of control attributes define more than 800 million different elementary data sets, each elementary data set being specified by a particular combination of control attributes. This high number of elementary data sets is a consequence of the highly granular nature of the multi-dimensional posting-related data sets and a pre-requisite of the multiple reporting mechanisms that are to be performed using the elementary data base 34 as single source of information.

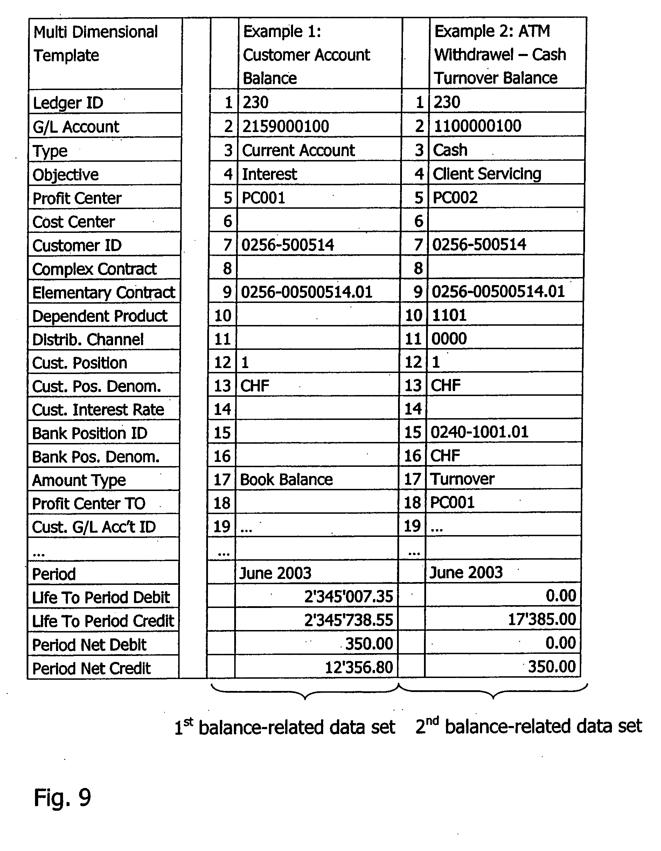

In Fig. 9 two exemplary elementary balance-related data sets generated by repeatedly accumulating different multi-dimensional ATM data sets as those depicted in Fig. 8 are shown. As becomes apparent from Fig. 9, the values included in data fields 29 (Debit) and 30 (Credit) of the multi-dimensional data sets shown in Fig. 8 are accumulated onto the data fields titled "Live to Period Debit", "Live to Period Credit", "Period Net Debit" and "Period Net Credit" of the individual balance-related data sets shown in Fig. 9. This accumulation is performed taking into account the temporal information included in data field 28 of the multi-dimensional posting-related data sets.

The individual elementary balance-related data sets stored in the elementary data base 34 reflect balance information generated by repeatedly accumulating particular data included in individual posing-related data sets. The multi-dimensionality of the posting-related data sets allows to define a plurality of 20, 30 or more key fields in the relational elementary data base 34 without the necessity to duplicate individual accumulated amounts. The key fields of the elementary data base 34 relate to the control attributes included in the posting-related data sets like a profit or cost center code, a customer ID or the like.

It should be noted that the balance-related data sets are shown in Fig. 9 in their logical structure. Due to the relational nature of the elementary data base 34 the individual data fields of a balance-related data set may be dispersed over various individual tables.

The posting processor 56 may operate asynchronously or perform the postings batch-wise. When the posting processor 56 updates the elementary information contained in elementary data sets on the basis of elementary information included in a posting-related data set retrieved from the item data base 48, the posting processor 56 additionally performs a linking operation appending a reference to the retrieved multi-dimensional posting-related data set to the updated elementary data set and/or vice versa.

Since the elementary data sets stored in the elementary data base 34 are updated on the basis of the elementary information included in the posting-related data sets, the elementary data sets correspond to individual data fields of the posting-related data sets (and thus to data fields of the generic data template as shown in Fig. 7). It is ensured that the information is kept in the elementary data base 34 on a very granular and elementary level, which helps to keep the processing mechanisms operating on the elementary data sets very generic. This is in contrast to the conventional processing mechanisms which in general do not operate on elementary information but on pre-processed information.

The elementary data sets stored in the elementary data base 34 are retrieved by the reporting processor 58 when performing different processing mechanisms like a financial accounting mechanism or a management accounting mechanism to generate respective report data sets (data set 1 to data set 4 in Fig. 5). Processing instruction data characteristic of the different processing mechanisms are stored as master data in the master data base 32. The processing mechanisms may simply be adapted by updating the respective processing instruction data stored in the master data base 32.

The report data sets like a balance sheet data set generated by the report processor 58 may be transferred via the LAN 42 depicted in Fig. 3 and Fig. 4 to the presentation servers 36 for being displayed on a local graphical user interface (GUI) or they may be transferred via any other data transfer mechanism to other computer systems as well, e.g. for consolidation processes on group level.

The elementary data sets stored in the elementary data base 34 are not only retrieved by the report processor 58 but also by the evaluation processor 54. The evaluation processor 54 performs processing mechanisms that are based on applying pre-defined evaluation criteria stored as processing instruction data in the master data base 32 and on determining if individual values contained in the extracted elementary data sets differ from actual values. Should this be the case, the evaluation processor 54 generates compensated multi-dimensional data sets as well as compensated accounting-related data sets as required. Any newly created and compensated accounting-related data set stored by the evaluation processor 54 in the entry data base 46 is then retrieved by the CPL processor 52, which processes the retrieved data set as explained above to generate one or more compensated multi-dimensional posting-related data sets that are stored in the item data base 48. The compensated multi-dimensional data sets thus generated may then be used by a subsequent processing mechanism to update the associated elementary data sets in the elementary data base 34.

Although preferred embodiments of the present invention have been illustrated in the accompanying drawings and described in the a foregoing detailed description, it will be understood that the invention is not limited to the embodiments disclosed, but is capable of numerous rearrangements, modifications and substitutions without departing from the spirit and scope of the invention as set forth and defined by the following claims.

## Claims

1. A network component (30) for transforming accounting-related data sets into multi-dimensional data sets which are used to update a data base (34) that is used by two or more different processing mechanisms (58) for providing report data sets, comprising:
- a master data base (32) for storing master data including static data and a multi-dimensional generic data template, the data template specifying predefined data fields relating to elementary information determined by the data input requirements of the different processing mechanisms;
- at least one interface (44) for receiving the accounting-related data sets from a plurality of individual sub-systems (10, 12, 14, 16);
- processing resources (52) having access to the master data base (32), for generating from an accounting-related data set one or more associated multi-dimensional data sets by deriving elementary information included in the accounting-related data set and in static data associated with the accounting-related data set and by writing the derived elementary information in corresponding data fields specified by the data template; and
- an elementary data base (34) updated on the basis of the elementary information contained in the one or more multi-dimensional data sets, wherein the elementary data base (34) is jointly used by the different processing mechanisms (58) to generate report data sets.

2. The network component of claim 1, wherein
the elementary data base (34) includes elementary data sets that correspond to the data fields of the data template at least partially.

3. The network component of claim 2, wherein
the processing resources (56) are programmed to update the elementary data base (34) by accumulating elementary information included in the multi-dimensional data sets onto newly created or already existing elementary data sets.

4. The network component of claim 3, wherein
the processing resources (52) are programmed to assign one or more control attributes to the multi-dimensional data sets, the control attributes being inserted or included in one or more data fields of the multi-dimensional data sets and controlling the process of accumulating the elementary information onto the elementary data sets.

5. The network component of claim 4, wherein
the one or more control attributes of the multi-dimensional data set include at least an identification code.

6. The network component of one of claims 2 to 5, wherein
one or more of the elementary data sets are linked with at least one of the multi-dimensional data sets accumulated thereon and the accounting-related data sets associated with the multi-dimensional data sets accumulated thereon.

7. The network component of one of claims 2 to 6, wherein
the processing resources (58) are programmed to generate the report data sets by applying the processing mechanisms to a plurality of the elementary data sets stored in the elementary data base (34).

8. The network component of claim 7, wherein
the elementary data base (34) is configured as the only source for providing authorized information for generating the report data sets.

9. The network component of one of claims 1 to 8, wherein
the elementary data base (34) is configured as a read-only data base with respect to all accesses different from updating.

10. The network component of one of claims 1 to 9, wherein
processing instruction data characteristic of the different processing mechanisms are stored as master data in the master data base (32).

11. The network component of one of claims 1 to 10, further comprising
an entry data base (46) for storing the accounting-related data sets received via the at least one interface (44) from the sub-systems (10, 12, 14, 16).

12. The network component of claim 11, wherein
at least one data sourcing component (44) is configured to format the accounting-related data sets received from the sub-systems (10, 12, 14, 16) and to write the formatted accounting-related data sets into the entry data base (46).

13. The network component of one of claims 1 to 12, further comprising
an item data base (48) for storing the multi-dimensional data sets generated by the processing resources (52).

14. The network component of claim 13, wherein
the multi-dimensional data sets stored in the item data base (48) are linked with at least one of the associated accounting-related data sets stored in the entry data base (46) and one or more of the associated elementary data sets stored in the elementary data base (34).

15. The network component of one of claims 1 to 14, wherein
the processing resources (52) are programmed to transform the accounting-related data set into one or more multi-dimensional data sets using the static data associated with the accounting-related data set.

16. The network component of claim 15, wherein
different types of accounting-related data sets are defined and wherein for each type of accounting-related data set an associated transformation is provided.

17. The network component of one of claims 1 to 16, wherein
the processing resources are programmed to identify for a specific accounting-related data set at least one of the associated static data and the associated transformation.

18. The network component of one of claims 1 to 17, wherein
the at least one data sourcing component (44) is configured to check the accounting-related data sets received from the sub-systems (10, 12, 14, 16) and to handle exceptions in the case of inconsistencies of one or more of the accounting-related data sets.

19. The network component of one of claims 1 to 18, wherein
the network component (30) is implemented as a three-tiered system including at least one presentation server (36) for presenting individual data sets or information derived therefrom, at least one application server (38) and one or more data base servers (40) including one or more of the data bases (32, 34, 46, 48).

20. The network component of one of claims 1 to 18, wherein
the network component (30) is implemented as a two-tiered system including at least one presentation server (36) for presenting individual data sets or information derived therefrom and at least one combined application and data base server (41).

21. The network component of one of claims 1 to 19, wherein
the processing resources (54) are programmed to access the elementary data base (34) for evaluation purposes during which at least one of new multi-dimensional data sets and new accounting-related data sets are generated.

22. A computer network system comprising the network component (30) of one of claims 1 to 21 and a plurality of sub-systems (10, 12, 14, 16) attached to the network component (30), wherein on each sub-system (10, 12, 14, 16) one or more individual applications for generating the accounting-related data sets are installed.

23. The computer network system of claim 22, wherein
the individual applications provide standardized accounting-related data sets.

24. The computer network system of claim 22 or 23, wherein
the individual applications are programmed not to perform any pre-processing with respect to the processing mechanisms applied by the network component (30).

25. A method of transforming accounting-related data sets into multi-dimensional data sets (48) which are used to update a data base (34) that is used by two or more different processing mechanisms (58) to provide report data sets, comprising:
- providing master data including static data and a multi-dimensional generic data template, the data template specifying pre-defined data fields relating to elementary information determined by the data input requirements of the different processing mechanisms;
- receiving the accounting-related data sets from a plurality of individual sub-systems (10, 12, 14, 16);
- generating for an accounting-related data set one or more associated multi-dimensional data sets by deriving elementary information included in the accounting-related data set and in static data associated with the accounting-related data set and by writing the derived elementary information in corresponding data fields specified by the data template; and
- updating a elementary data base (34) on the basis of the elementary information contained in the one or more multi-dimensional data sets, wherein the elementary data base (34) is jointly used by the different processing mechanisms to generate report data sets.

26. A computer program product including program code portions for performing the steps of claim 25 when the computer program product is run on one or more components of a computer network.

27. The computer program product of claim 26, stored on a computer-readable recording medium.

28. A multi-dimensional data structure generated from a plurality of accounting-related data sets by the method defined in claim 25 and jointly used by a plurality of processing mechanisms like financial and management accounting mechanisms differing with respect to data input requirements, the data structure including a plurality of elementary data sets that mirror the data fields of a multi-dimensional generic data template, the data fields relating to elementary information determined by the data input requirements of the different processing mechanisms, wherein the elementary data sets contain accumulated elementary information derived from multi-dimensional data sets generated from the accounting-related data sets using the data template.
